# EUROPEAN PATENT SPECIFICATION

(11) **EP 0 893 922 B1**
(45) Date of publication and mention of the grant of the patent: **02.06.2004**
(21) Application number: 98119298.2
(22) Date of filing: 28.09.1992
(51) Int. Cl.: H04N 7/173

(54) **A method and its equipment for two-way interactive communication by television**
Verfahren und Einrichtung für interaktive Zweiwegfernsehübertragung
Méthode et appareil pour communication interactive à deux voies en télévision

(30) Priority: 30.09.1991 ES 9102144; 10.04.1992 ES 9200772
(43) Date of publication of application: 27.01.1999
(62) Divisional of application: 92116562.7
(73) Proprietor: INTERACTIVE TELEVISION, S.A., 08007 Barcelona (ES)
(72) Inventor: Arias Gabasa, Félix, 08006 Barcelona (ES)
(74) Representative: Duran Moya, Carlos

(56) References cited:
- US-A- 4 750 036
- KING P D: "DEVICE FOR THE INTEGRATION OF TELEVISION AND TELEPHONE CONTROL VIA HAND HELD INFRARED REMOTE" PROCEEDINGS OF THE WESTERN CANADA CONFERENCE ON COMPUTER, POWER AND COMMUNICATIONS SYSTEMS IN A RURAL ENVIRONMENT. (WESCANEX), REGINA, MAY 29 - 30, 1991,29 May 1991, pages 309-311, XP000313096 INSTITUTE OF ELECTRICAL AND ELECTRONICS ENGINEERS
- GARR M J ET AL: "DATA BROADCASTING IN THE USA LOW COST DELIVERY ALTERNATIVE AND MORE" IEEE TRANSACTIONS ON CONSUMER ELECTRONICS, vol. 36, no. 4, 1 November 1990, pages 877-884, XP000178993

## Description

This patent discloses a system for two-way interactive communication using television, the system having as object the interrelation between televiewers and data processing and control centres through the telephone network, receiving information on the television, normally from a commercial television transmitter to which may be sent optionally, information from the data processing and control centres.

Systems exist within the current state of the art for interrelation between a television transmitting station and the viewer by means of suitably codified signals preferably by modulation but also using the vertical interval space forming signals in the area not detectable by the viewer without the use of a control means such as a monitoring device which receives the coded signal and transforms it to a signal which activates a piece of apparatus available to the viewer such as a toy automotive, educational matter or some other such device.

In EP-A3-0 396 062 a method for selectively distributing video presentations is disclosed. This method is carried out via a television network from a central location to individual remote terminals and comprises the steps of:
initiating a telephone call from one of said remote terminals to establish a telephone line connection with said central location;
upon establishing said connection, transmitting a transmission path identification from said terminal to the central location by means of the telephone line connection, said transmission path identification identifying a particular transmission path in said network for transmitting video information from said central location to the remote terminal;
transmitting from said remote terminal to said central location, via said telephone line connection, a selection for a particular video presentation;
retrieving video data related to the selected presentation at said central location, encoding the video data with an address associated with the terminal and with said transmission path identification; and
transmitting the encoded data from the central location to the remote terminal over said particular transmission path.

US-A-4750036 refers to a transmission system to establish bidirectional transmission channels for data through the radio electric spectrum corresponding to a channel adjacent to another analogic TV channel.

The document GARR M J et al.: "Data broadcasting in the USA low cost delivery alternative and more" IEEE Transactions on Consumer Electronics, vol. 36, no. 4,1 November 1990, pages 877-884, XP000178993 refers to "datacasting" as system for unidirectionally sending data from a unique point of origin to multiple receiving points. However it does not disclose interactive TV.

The object of this patent is a novel system of communication using televised signals which can establish an interrelation between the televiewer and control centres such that the former may participate on a two-way basis and actively in the programmes being shown on television, both as direct broadcasts and pre-recordings as well as those specifically for publicity in such a way that by means of the data received through the television screen and converted to messages on the televiewer's visual monitor, the viewer is able to participate interactively by generating calls through the telephone exchange network, the Ibertex or other similar systems, to the data processing and control centres and eventually with the television studio itself.

By these means the system object of this patent, enables the user from his home and equipped with a remote control associated with a television receiver and also the telephone network instrument to have access to new forms of entertainment, education, commercial transactions and dealings etc. all based on the fundamental characteristic of a two-way interactive participation of the televiewer corresponding to the signals received through the television screen made visual to the viewer by means of the decoding apparatus and the visual display monitor.

The present invention comprises a system as set out in claim 1 and a method as set out in claim 3.

This dual communication route using the receiver unit through the standard and the codified television reception and the connection with the aforementioned data processing centres may be extended optionally to communication between the data processing centres and the television studios supplying data to the latter, depending on the type of function which the data processing centre wishes to carry out. Information so communicated will be coded such that the signals sent out on television will include the non-visible signals as required by each of the functions controlled by the centres.

Difficulties may arise in some geographical areas where reception is poor from the television and under these conditions it is possible that the normal television signal is adequate for viewing but the coded signal in certain specific instances may not be of sufficient quality to decipher the message emitted by the data processing centres for each function of the system.

To obviate this difficulty this patent provides for the signals originating at the data processing centres to be transmitted direct to the receiving unit or complete interactive terminal (CIT) by radio, that is as variable frequency signals which having direct access to the CIT equipment do not suffer from the deficiencies to which television is subject under certain circumstances or in certain areas.

Radio transmission can be by using a Frequency Modulation carrier wave of the RDS system.

In any case while the radio signals may be emitted by frequency modulation they will comply precisely to meet the real time synchronization with the television signals.

It is evident that the system may comprise both the use of codified television signals through the normal television channels and simultaneously the reception of radio signals emitted by frequency modulation from the data processing centers and complying precisely to meet the real time synchronization with the television signals. The complete interactive terminal (CIT) in this case will be able to receive and interpret both types of signals.

It is clear from the above that the system herein disclosed provides a clear and real communication in an interactive two-way system such that the television viewer can participate directly and in real time in the programmes and announcements appearing on the television screen.

The numerous applications of the novel system open new opportunities in the field of education, competitions, lotteries and commercial transactions as well as for electronic information of all types such as relating to stock issues and financial services and notices. To put this into effect it is simply necessary to programme the data processing centres, each with the specific function relevant to its purpose, codify the information for its introduction into the signal transmitted by the television station so that it arrives in that form at the receiver and that the user, operating his individual control unit may participate in the operations to which he will have access under some form of contract by the purchase of equipment, payment of rentals or other consideration for the service.

The interactive unit at the disposal of the user is a complete interactive terminal, here designated the CIT, which can receive the televised coded programme or video programme so that the viewer watching the screen may participate on a two way basis in the system as a whole. The CIT unit may be connected to the video output socket of the television receiver or to the video itself and to the telephone network as an accessory to the main telephone instrument. The CTT includes a microprocessor for controlling the terminal and its sub-systems, a display screen preferably of the vacuum gas-filled fluorescent tube type, a printer, preferable of the thermic type, a coded signal receiver and a Modem for communicating with the telephone network.

To assist the decription block diagrams are attached to this patent showing by way of a non restrictive example, schematic laynut arrangements of the described system.

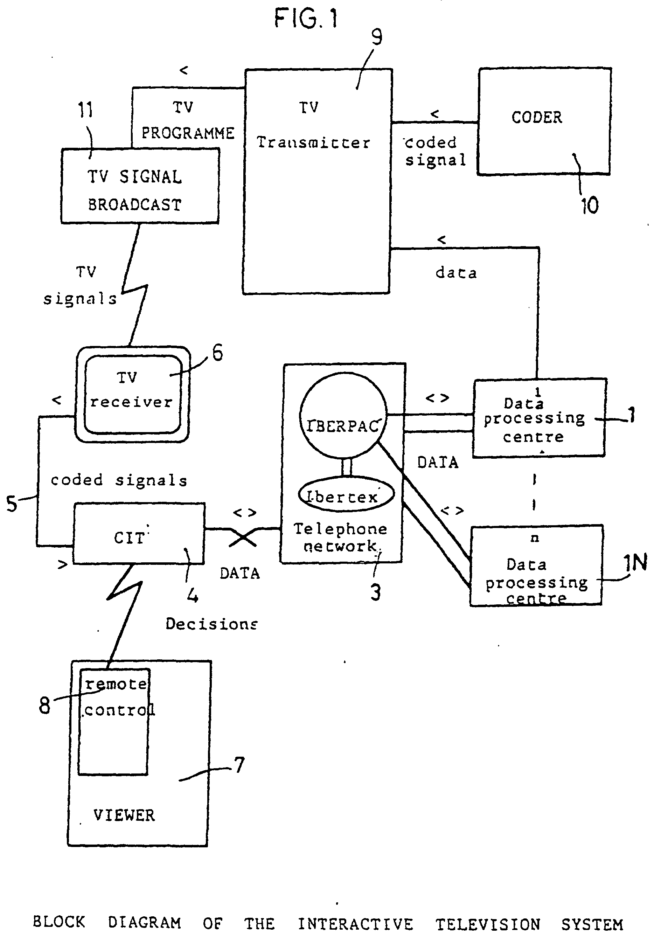

Figure 1 shows the complete two-way interactive system in block diagram form.

Figure 2 also in block diagram form shows the complete interactive terminal.

As may be seen from the diagrams this novel system for two-way interactive communication comprises a series varying in number, such as 1... 1N, of data processing centres in a circuit which can be closed throug the various units forming the system consisting of the telephone exchange network -3- which in turn is connected to the complete interactive terminal -4- through the domestic phone instrument, not shown here. As stated previously the CIT unit receives the coded signal through the video output -5- of the television receiver -6-, the said CIT unit having the necessary means to establish communication with the viewer, indicated in the diagram as -7- who has at his disposal an infra-red remote control switch -8-enabling him to instruct the interactive unit in accordance with the functions required.

The television transmitter -9- is in circuit with the coding unit - 10- thus receiving signals in code form which can then be broadcast with the television programmes on the usual network -11- being received by the domestic television set -6-. For some purposes the route for communication between the data processing centres 1....1N and the television transmitter -9- can be short circuited such that the centre may receive the responses direct from the televiewer in answer to messages sent as coded signals.

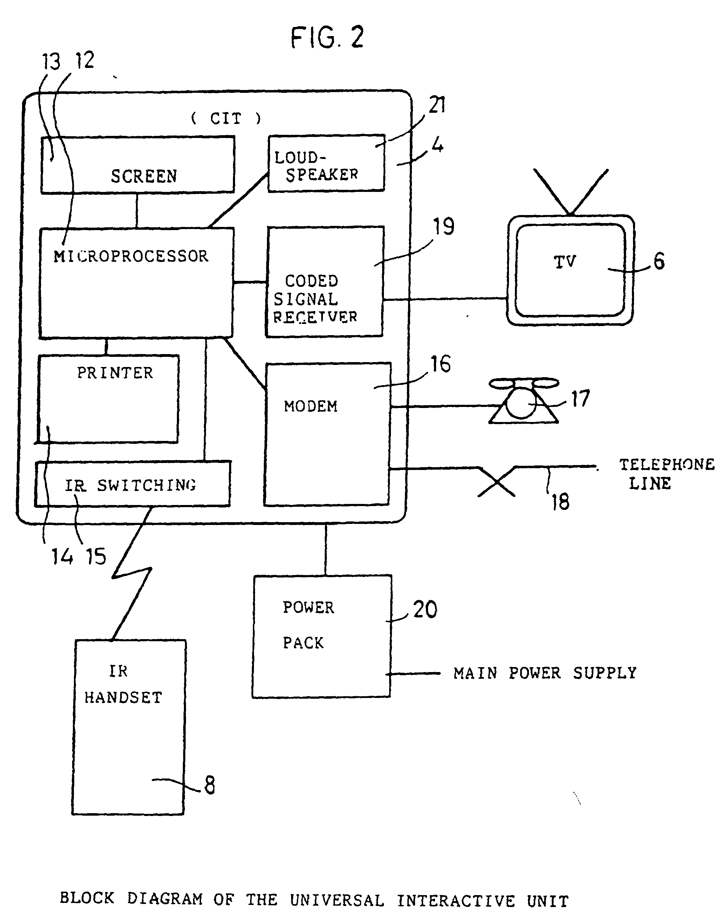

The complete interactive terminal -4- as shown in the figure 2 comprises a microprocessor -12- and a display screen -13- visible to the user with a connection to a printer -14- preferably of the thermic type, to convey messages, figures and other information to the viewer in writing. The complete interactive terminal or CIT is provided with an infra red sensitive switch -15- for acceptance of commands from the remote control emitter -8- as well as a Modem -16-, interconnected with the domestic telephone instrument -17- and hence with the telephone line network -18-. A coded signal receiver -19- accepts the coded signals from the television receiver -6- which are then accessed to the microprocessor and form the base of the functions to be carried out as output of the complete interactive terminal. The CIT is powered from a suitable power pack -20- or batteries at low voltage being preferably in the 6 to 24 volt range.

The microprocessor -12- for preference is of 8 bits and of CMOS technology, with between 8 and 64K ROM memory and from 32 to 1024K RAM memory.

The screen -13- is preferably of the vaccuum gas discharge fluorescent type with between 8 and 80 characters on one or two lines of text, for display of the messages received by the terminal and within the vision of the user. The characters should be of a size that makes the information they portray legible at a minimum of 5 metres in any ambient luminosity level.

The remote control device -8- operates on the CIT unit by issueing commands by infra red with 10 numerical keys, two yes/no keys and from 6 to 24 function and service keys. For some applications such as games an alternative key layout plan can be superimposed to provide the viewer with a faster and simpler response.

The modem -16- in the CIT terminal will preferably be of type V 23 (1200,75 HALF DUPLEX) with automatic decadic multifrequency marking but without autoresponse. The CIT also is equipped with a DTMF tone generator for access to audiotex data banks. The audible information is delivered to the user by a built in loudspeaker -21-.

Furthermore the complete interactive terminal or CIT need not have a special printer but can be fitted with a standard commercially available printer using a standard output connection such as the RS-232 interface plug/socket system.

Equally the CIT need not have its own special display screen but can be provided with the standard video socket as for example a BNC connector for a monitor or external commercially available VDU.

The remote control handset can also be dispensed with and replaced by keyboard connected by cable or by radio to the terminal.

Other variations can be introduced among which can be the reduction of the CIT unit down to a PC card containing the codified signal receiver logic and with connections for television receivers or video recorders so that once the card is inserted in the Personal Computer with the relevant computer programming, the PC functions as an complete interactive terminal. Another variant of this type is to replace the PC insertable card by a CIT in the form of a unit consisting of the codified signal receiver logic, the connection means for the television receiver or video recorder, a power supply and an entry/exit connection as for example, a serial port, for a Personal Computer.

The communication between the user's complete interactive terminal and the data processing centres is also possible by means of radio using a specific allocated frequency instead of the telephone network or by cable or through the power line distribution system used as a transmission network equally in place of the telephone network.

The system described includes the access to the various data processing centres by the telephone public network, the Ibertex network but also includes access through other systems or by radio by the use of Modems other than the V23. For each application the relevant access reference will be made known at the terminal by software or by means of coded massages.

This new system will be of particular interest to television Companies as it offers the possibility of obtaining a response from viewers who are watching television programmmes or publicity and so providing a reliable ratings figure and hence lessening the phenomena known as "Zapping" and improving viewer fidelity.

The above characteristic can provide additionally an improved accountability to the advertisers and the television viewers are able to participate in many other forms of commercial activity and at the same time result in an improvement in audience data as compared to the actual methods, both as to number and category of viewer.

Television advertisers can obtain an increased efficiency in their campaign messages to actual and potential customers which can be accompanied by direct participation with messages tailored specifically to the selected clientele both for general promotion and for sales campaigns.

The above possibilities offer considerable advantages to publicity agencies, telephone operating Companies and distribution networks as well as providing an effective means for market research and for banking operations and other services.

## Claims

1. A system for two-way interactive communication by television comprising:
a TV broadcasting station (9),
a TV receiver or TV set (6),
a complete interactive terminal, CIT, (4),
a number of data processing centres (1, 1N) connected to the CIT (4) via a two-way telephone line or an intercommunication system by means of radio on variable frequencies synchronized as to real time with the television signals and providing to said CIT (4) specific information in the form of encoded signals, said information corresponding to the particular application controlled by the respective centre (1,1N),
wherein means are provided for performing an intercommunication method in which the TV broadcasting station (9) transmits video signals comprising signals from the data processing centres (1,1N) to the TV set (6), the TV set (6) forwards the video signals to the CIT (4), the CIT (4) receives and decodes the signals coming from the data processing centres (1,1N) and transfoms them into visible and/or audible information for the user through the TV set;
the CIT (4) further comprises means for receiving commands from the user (7) and means for forwarding the commands to the data processing centres (1,1N) via the two-way telephone line or radio using a specific allocated frequency.

2. A system as in claim 1 in which the CIT (4) receives commands from the user (7) and forwards the commands to the data processing centres (1,1N) via the intercommunication system.

3. A method for two-way interactive communication by television comprising steps carrying out the function of each of the means of the system of claims 1 or 2, in which the communication between the complete interactive terminal (4) and the data processing centres (1,1N) is by means of radio on a specific network channel.

## Patentansprüche

1. System für interaktive Zweiwegekommunikation mittels Fernsehen, das umfaßt:
eine Fernsehrundfunkstation (9),
einen Fernsehempfänger oder ein TV-Gerät (6),
ein vollständiges interaktives Endgerät, CIT, (4),
eine Anzahl von Datenverarbeitungszentren (1, 1N), die mit dem CIT (4) über eine Zweiwege-Telephonleitung oder ein Interkommunikationssystem mittels Funk auf variablen Frequenzen, die in Echtzeit mit den Femsehsignalen synchronisiert sind, verbunden sind und für das CIT (4) bestimmte Informationen in Form codierter Signale bereitstellen, wobei die Informationen der besonderen Anwendung entsprechen, die durch das jeweilige Zentrum (1, 1N) gesteuert wird, wobei Mittel vorgesehen sind, um ein Interkommunikationsverfahren auszuführen, bei dem die Fernsehrundfunkstation (9) Videosignale, die Signale von den Datenverarbeitungszentren (1, 1N) enthalten, zu dem TV-Gerät (6) sendet, wobei das TV-Gerät (6) die Videosignale zu dem CIT (4) weiterleitet, wobei das CIT (4) die Signale, die von den Datenverarbeitungszentren (1, 1N) stammen, empfängt und decodiert und sie in sichtbare und/oder hörbare Informationen für den Anwender über das TV-Gerät umwandelt;
wobei das CIT (4) ferner Mittel, die Befehle von dem Anwender (7) empfangen, und Mittel, die die Befehle an die Datenverarbeitungszentren (1, 1N) über die Zweiwege-Telephonleitung oder über Funk unter Verwendung einer bestimmten zugewiesenen Frequenz weiterleiten, umfaßt.

2. System nach Anspruch 1, bei dem das CIT (4) Befehle von dem Anwender (7) empfängt und die Befehle über das Interkommunikationssystem an die Datenverarbeitungszentren (1, 1N) weiterleitet.

3. Verfahren für eine interaktive Zweiwegekommunikation mittels Femsehen, das Schritte umfaßt, die die Funktion jedes der Mittel des Systems nach den Ansprüchen 1 oder 2 ausführen, wobei die Kommunikation zwischen dem vollständigen interaktiven Endgerät (4) und den Datenverarbeitungszentren (1, 1N) über Funk auf einen bestimmten Netzkanal erfolgt.

## Revendications

1. système pour communication interactive à deux voies par télévision, comprenant :
une station de diffusion TV (9),
un récepteur ou appareil TV (6),
un terminal interactif complet, TIC (4),
un certain nombre de centres de traitement de données (1,1N) raccordés au TIC (4) via une ligne téléphonique à deux voies ou un système d'intercommunication au moyen de la radio sur fréquences variables synchronisées quant au temps réel avec les signaux de télévision et fournissant au dit TIC (4) des informations spécifiques sous la forme de signaux codés, lesdites informations correspondant à l'application particulière commandée par le centre respectif (1,1N), dans lequel des moyens sont prévus pour effectuer un procédé d'intercommunication dans lequel la station de diffusion TV (9) transmet des signaux vidéo comprenant les signaux provenant des centres de traitement de données (1,1N) à l'appareil TV (6), l'appareil TV (6) transmet les signaux vidéo au TIC (4), le TIC (4) reçoit et décode les signaux provenant des centres de traitement de données (1,1N) et les transforme en informations visibles et/ou audibles pour l'utilisateur par l'intermédiaire de l'appareil TV,
le TIC comprend de plus des moyens pour recevoir des commandes en provenance de l'utilisateur (7) et des moyens pour transmettre les commandes à destination des centres de traitement des données (1,1N) via la ligne téléphonique à deux voies ou la radio en utilisant une fréquence spécifique affectée.

2. Système selon la revendication 1, dans laquelle le TIC (4) reçoit des commandes en provenance de l'utilisateur (7) et transmet les commandes à destination des centres de traitement des données (1,1N) via le système d'intercommunication.

3. Procédé pour une communication interactive à deux voies par télévision, comprenant les étapes consistant à effectuer la fonction de chacun des moyens du système selon les revendications 1 ou 2, dans lequel la communication entre le terminal interactif complet (4) et les centres de traitement des données (1,1N) s'effectue au moyen de la radio sur un canal de réseau spécifique.
